# EUROPEAN PATENT SPECIFICATION

(11) **EP 3 150 836 B1**
(45) Date of publication and mention of the grant of the patent: **24.06.2026**
(21) Application number: 16191199.5
(22) Date of filing: 28.09.2016
(51) Int. Cl.: F02K 1/38, F02K 1/48, F01D 9/02

(54) **INTEGRATED TEC/MIXER STRUT AXIAL POSITION**
AXIALE POSITION EINER INTEGRIERTEN TEC-/MISCHERSTREBE
POSITION AXIALE D'ENTRETOISE DE MÉLANGEUR/TEC INTÉGRÉ

(30) Priority: 02.10.2015 US 201562236177 P; 25.04.2016 US 201615137257
(43) Date of publication of application: 05.04.2017
(73) Proprietor: Pratt & Whitney Canada Corp., Longueuil, Québec J4G 1A1 (CA)
(72) Inventor: MARINI, Remo, Longueuil, Québec J4G 1A1 (CA); CUNNINGHAM, Mark Huzzard, Longueuil, Québec J4G 1A1 (CA); BISSON, Francois C., Longueuil, Québec J4G 1A1 (CA); KAMESHKI, Reza Mohammad, Longueuil, Québec J4G 1A1 (CA)
(74) Representative: Dehns

(56) References cited:
- EP-A1- 2 851 516
- EP-A1- 3 012 442
- US-A1- 2011 265 447

## Description

### TECHNICAL FIELD

The application relates generally to turbofan aero-engines and, more particularly to an improved turbine exhaust case including a mixer for such engines.

### BACKGROUND OF THE ART

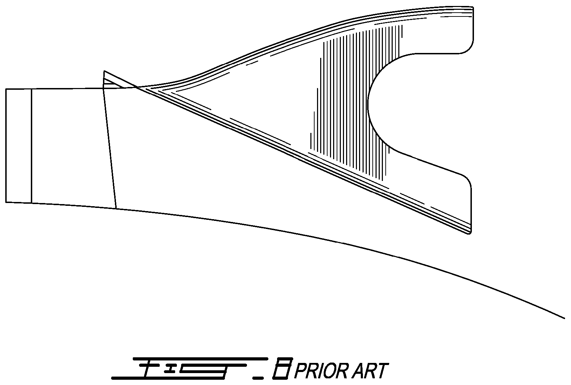

In order to increase the effective thrust of turbojet engines, bladed fans have been added to a turbine driven shaft thereof to affect the flow of a quantity of atmospheric air through an annular bypass duct surrounding the turbojet. Hot gases exhausted from the engine core and the bypass airstream are mixed together before expulsion through a single nozzle. In order to perform the mixing function, mixers have been attached to the downstream end of a shroud of the turbine exhaust case (TEC). A swirling flow of exhaust gases from the turbine exit is conventionally deswirled by a plurality of deswirling struts located within the TEC, upstream of the mixer as shown in FIG. 8, such that the exhausted gases are substantially deswirled prior to entering the mixer in order to maximize the performance of the mixer and to promote efficient mixing with minimum pressure losses. Nevertheless, there is room for improvement of such a conventional configuration of deswirling struts and mixer.

Accordingly there is a need to provide an improved mixer.

EP 2851516 A1 discloses a prior art turbine exhaust case as set forth in the preamble of claim 1.

### SUMMARY

In one aspect, there is provided a turbine exhaust case (TEC) of a turbofan aeroengine as set forth in claim 1.

In another aspect, there is provided a turbofan aeroengine as set forth in claim 9.

Further details of these and other aspects of the described subject matter will be apparent from the detailed description and drawings included below.

### DESCRIPTION OF THE DRAWINGS

Reference is now made to the accompanying figures in which:
FIG. 1 is a schematic side cross-sectional view of an examplary turbofan aeroengine showing an application of the described subject matter according to one embodiment;
FIG. 2 is a perspective view of a turbine exhaust case mixer which may be used in the engine of FIG. 1;
FIG. 3 is a partial cross-sectional view of the engine of FIG. 1, showing another mixer integrated with deswirling struts in an enlarged scale;
FIG. 4 is a perspective view of the mixer incorporated with the deswirling strut of FIG. 3, with the deswirling strut partially cut away to show a cross-section thereof;
FIG. 5 is a cross-sectional view of the deswirling strut to show the cross-section of the deswirling strut in FIG. 4 having an aerofoil profile;
FIG. 6 is a partial cross-sectional view of the engine of FIG. 1, showing a further mixer integrated with deswirling struts in an enlarged scale;
FIG. 7 is a partial cross-sectional view of the engine of FIG. 1, showing an embodiment of the mixer integrated with deswirling struts in an enlarged scale; and
FIG. 8 is a partial cross-sectional view of a turbine exhaust case mixer conventionally attached to the turbine exhaust case downstream of deswirling struts installed within the turbine exhaust case.

It will be noted that throughout the appended drawings in various embodiments, like features are identified by like reference numerals and will not be redundantly described.

### DETAILED DESCRIPTION

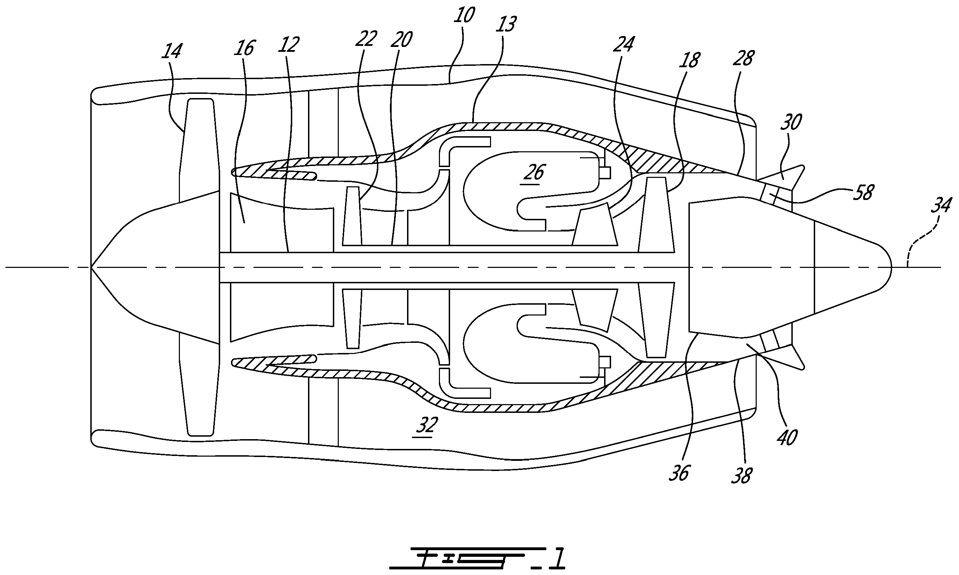

FIG. 1 illustrates an exemplary turbofan aeroengine which includes a nacelle configuration 10, a core casing 13, a low pressure spool assembly seen generally at 12 which includes a fan assembly 14, a low pressure compressor assembly 16 and a low pressure turbine assembly 18, and a high pressure spool assembly seen generally at 20 which includes a high pressure compressor assembly 22 and a high pressure turbine assembly 24. The core casing 13 surrounds the low and high pressure spool assemblies 12 and 20 in order to define a main fluid path (not numbered) therethrough. In the main fluid path there is provided a combustion chamber 26 in which a combustion process produces combustion gases to power the high and low turbine pressure assemblies 24 and 18. A turbine exhaust case (TEC) 28 is provided to form a downstream end of the core casing 13 and includes an annular mixer 30 attached thereto to form the downstream end of the TEC 28 for mixing hot exhaust gases discharged from the high and low pressure turbine assemblies 24, 18 through the main fluid path, with a bypass airstream driven by the fan assembly 14 through an annular bypass duct 32 which is defined radially between the nacelle configuration 10 and the core casing 13.

Referring to FIGS. 1-3, the TEC 28 and the mixer 30 define a common central axis 34 which substantially superposes a central rotation axis of the aeroengine. The TEC 28 includes an annular hub 36 and an annular shroud 38 with the annular mixer 30 attached to a downstream end of the shroud 38. The shroud 38 and the mixer 30 surround the hub 36 to form an annular exhaust gas duct 40 disposed radially therebetween.

It should be noted that the terms "upstream" and "downstream" used herein and hereinafter refer to the direction of a fluid flow passing through the main fluid path of the engine. It should also be noted that the terms "axial", "radial" and "circumferential" are used with respect to the central axis 34.

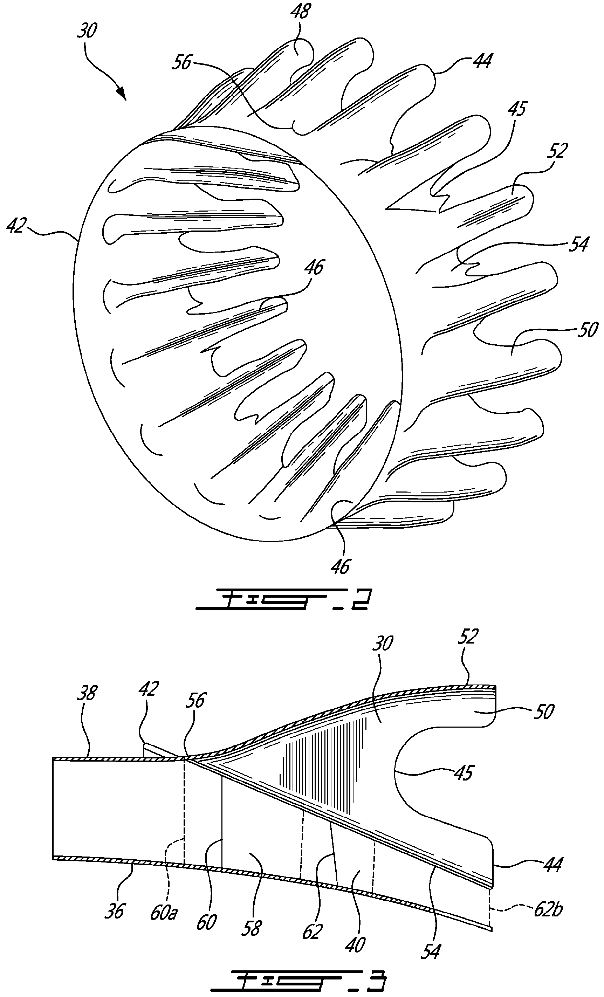

The mixer 30 as shown in FIG. 2, may define an annular wavy configuration around the central axis 34 and may axially extend between an upstream end 42 and a downstream end 44 thereof. The annular mixer 30 may include radially-inner and radially-outer flow surfaces 46, 48 extending between the upstream and downstream ends 42, 44 of the mixer 30 and being exposed to the respective hot exhaust gases and bypass airstream. The hot exhaust gases are directed to pass along the inner surface, 46 and the bypass airstream is directed to pass along the outer surface 48. The inner and outer flow surfaces 46, 48 may be in a circumferentially wavy or twisted annular configuration to thereby form a plurality of lobes 50 of the mixer 30. The lobes 50 may be axially extending or axially straight and may define a plurality of alternating crests 52 and valleys 54. In a cross-sectional view as shown in FIG. 3, adjacent crest 52 and valley 54 extend from an axial start location 56 which is close to the upstream end 42 (more clearly shown in FIG. 3), and diverge to the downstream end 44 of the mixer 30.

The radially-inner surface 46 may define inner passageways (not numbered) axially and radially-outwardly along the respective crests 52 for directing the exhaust gases flowing through the annular exhaust gas duct 40. The radially-outer flow surface 48 may define external passageways (not numbered) axially and radially-inwardly along the respective valleys 54 for directing the bypass airstream coming through the annular bypass air duct 32 to flow through the mixer 30. Therefore, the internal and external passageways of the mixer 30 may in combination establish a vortex system downstream of the mixer 30 to encourage mixing between the bypass airstream and the turbine exhaust gases during operation of the aeroengine.

Referring to FIGS. 1 and 3-5, which fall outside the wording of the claims, a mixer 30 may include a plurality of deswirling struts 58 circumferentially spaced apart with respect to the central axis 34. The deswirling struts 58 may be disposed entirely within an axial length of the mixer 30, between the upstream end 42 and the downstream end 44 of the mixer 30. The deswirling struts 58 may extend radially across the annular exhaust gas duct 40 and may interconnect the mixer 30 and the hub 36 of the TEC 28.

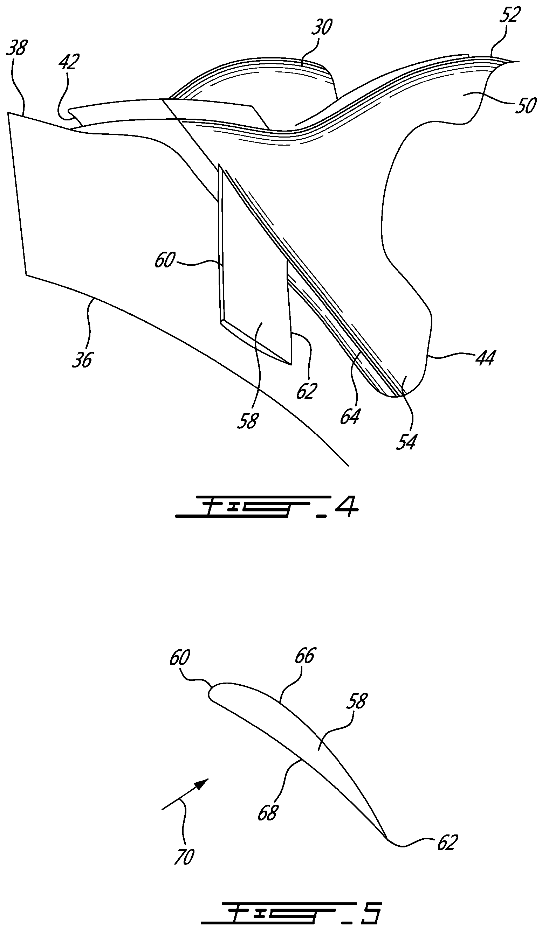

The deswirling struts 58 each include a leading edge 60 and a trailing edge 62. The trailing edge 62 of each deswirling strut 58 according to one embodiment may circumferentially align with a bottom of the valley 54 such as a bottom line 64 (see FIG. 4) which is a center line of the valley 54. The deswirling struts 58 according to one embodiment may be axially located in a middle area of the mixer 30 such that the leading edges 60 of the respective deswirling struts 58 are axially spaced away from the start location 56 of the divergently extending crests 52 and valleys 54 and such that the trailing edges 62 of the respective deswirling struts 58 are axially spaced away from a downstream end of the respective valleys 54 of the mixer 30. The downstream end of the respective valleys 54 according to this embodiment are the downstream end 44 of the mixer 30 because the crests 52 and valleys 54 have a substantially equal axial length as shown in FIG. 3. However, if the axial length of the valleys 54 is less than the axial length of the crests 52, the downstream end of the valleys 54 will not be the downstream end of the mixer 30.

Optionally, the deswirling struts 58 may each have a cambered profile, for example including a convex side 66 and a concave side 68 extending between the leading and trailing edges 60 and 62 as shown in the cross-sectional view of the deswirling strut 58 in FIG. 5. The struts 58 are cambered in the direction of an incoming swirling flow of the exhaust gases, as indicated by arrow 70 in FIG. 5.

According to one embodiment the deswirling of the swirling flow 70 of the exhaust gases discharged from the low pressure turbine assembly 38 and passing through the annular exhaust gas duct 40, may be accomplished within the mixer 30 by both the deswirling struts 58 and the mixer lobes 50. The swirling flow 70 of exhaust gases passing through the annular exhaust gas duct 40 near the hub 36 may be deswirled by the deswirling struts 58. The swirling flow 70 of the exhaust gases passing through the annular exhaust gas duct 40 near the shroud 38 may be deswirled by the lobes 50 of the mixer 30. With the configuration as described in the above embodiments, the deswirling and mixing functions may be accomplished within a much shorter axial length of the TEC and mixer in contrast to conventional TEC and mixer configurations, thereby advantageously saving engine and nacelle weight. The configuration of the above-described embodiments, can deswirl the swirling flow of exhaust gases and mix the exhaust gases with the bypass air stream with a performance equivalent to or better than that of conventional separate mixer and TEC struts.

The size, shape and position of the deswirling struts may be optimized based on the application and are dependent on the flow conditions including the residual swirl condition from the low pressure turbine assembly 18. The deswirling struts according to the described embodiments may be incorporated into any conventional TEC mixer when the swirl in the exhausted gases is required to be removed. For example, some of the described embodiments may be applicable to TEC mixers in which the axial length of the valleys of the mixers are longer than the axial length of the crests of the mixers.

Alternatively, the deswirling struts 58 may be axially located within the mixer 30 such that the leading edge 60 of each of the deswirling struts 58 axially aligns with the start location 56 of the divergently extending crests 52 and valleys 54, as shown by broken line 60a in FIG. 3. In an example, which is not part of the invention, the deswirling struts 58 may be axially located within the mixer 30 such that the trailing edge 62 of each of the deswirling struts 58 axially aligns with the downstream end of the respective valleys 54, as indicated by broken line 62b in FIG. 3.

Optionally, each of the valleys 54 of the mixer 30 may be connected with one of the deswirling struts. Also optionally, every second one of the valleys 54 of the mixer 30 may be connected with one of the deswirling struts. Furthermore, the deswirling struts may be circumferentially located at other intervals of the valleys 54 of the mixer 30.

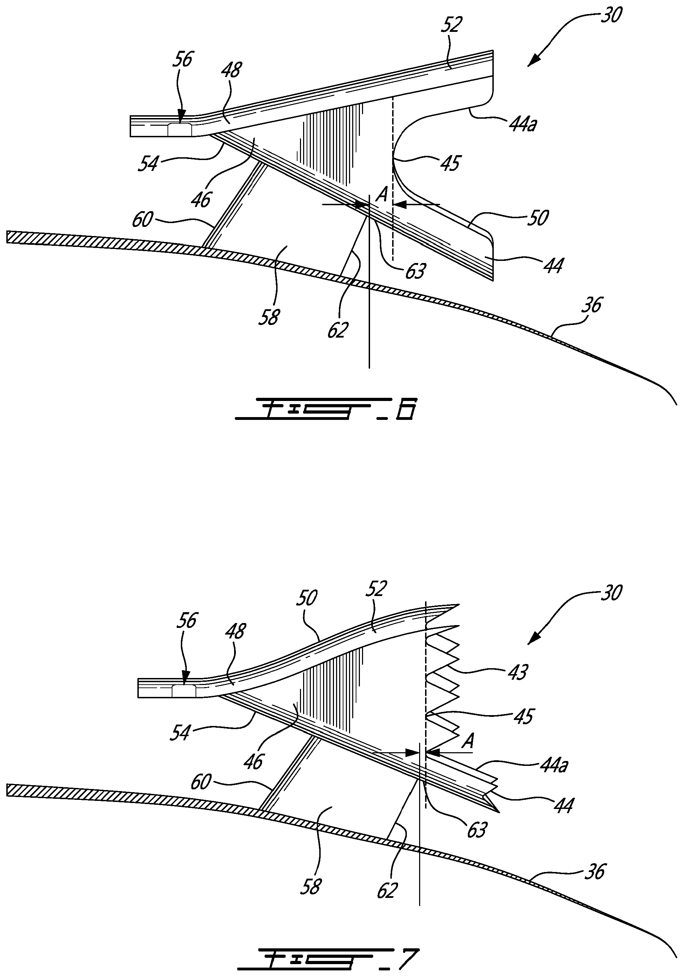

FIG. 6, which falls outside the wording of the claims, illustrates a mixer 30 that is substantially similar to that shown in FIG. 3, having the crests 52 and valleys 54 diverging from one another beginning at an upstream end of an axial length of the lobes 50 and extending divergently from one another toward and terminating at a trailing edge 44a of the downstream end 44 of the mixer 30. The trailing edge 44a may also be a trailing edge of the lobes 50 and thus defines a downstream end of the axial length of the lobes 50. The trailing edge 44a of the mixer 30 according to this mixer, may define a closed loop having a scalloped trailing edge profile with a curved trailing edge section extending between the respective adjacent crests 52 and valleys 54 for a mixer lobe trailing edge treatment. The respective curved trailing edge sections of the mixer trailing edge 44a may define one or more upstream-most locations 45 (such as in the curved trailing edge section of an identified shape) which is referred to as the mixer lobe trailing edge treatment root. At this trailing edge treatment root, which is as mentioned the upstream-most location of the lobe trailing edge, the mixing action of the hot gases passing along the radially-inner surface 46 and the bypass air stream passing along the radially-outer surface 48 begins to take place earlier than at the remaining locations of the trailing edge 44a of the mixer 30. In other words, mixing begins at trailing edge treatment root, and where the root is not at a constant radial location relative to the flow through the mixer, mixing begins at the upstream-most location or root of the lobe trailing edge. In FIG 6., the trailing edge treatment root or upstream-most location 45 is the base of the scalloped cutout between adjacent crests 52 and valleys 54. Referring momentarily to FIG. 7, the trailing edge treatment root or upstream-most location 45 is at the apex of the triangular cutout(s). Though not depicted, the skilled reader will appreciate that a mixer may also have a planar trailing edge at which mixing occurs across a radially-extending exit plane, i.e. has no cutouts, and that in such case with a linear trailing edge the upstream-most location or root would be anywhere on the radial exit plane.

Recent studies and test data show that the axial position of the integrated TEC struts 58 may affect the mixer lobe trailing edge treatment if the axial position of the TEC struts 58 with respect to the lobe trailing edge treatment root is left uncontrolled, which thereby impacts performance such as thrust reduction.

Therefore, the trailing edge 62 of the respective struts 58 which are located entirely within the axial length of the lobes 50 according to this mixer, may be positioned upstream of the mixer lobe trailing edge treatment root. A tip point 63 of the strut trailing edge 62, which may be a joint or intersection point between the deswirling strut 58 and the mixer 30, is positioned upstream of the one or more upstream-most locations of the trailing edge treatment root 45 of the mixer trailing edge 44a, and is axially distanced from the one or more upstream-most locations 45 by a predetermined axial clearance A as shown in FIG. 6. The axial clearance A, which is the axial distance that the tip point 63 of the deswirling strut trailing edge 62 is positioned axially upstream one or more upstream-most locations of the trailing edge treatment root 45 of the mixer trailing edge 44a, may be determined differently in various applications. The clearance A is selected in order to ensure that the core flow of the engine is sufficiently deswirled before reaching the deswirling strut trailing edges 62, without imparting significant radial flow migration caused by the presence of the mixer lobe trailing edge treatment which may otherwise cause a performance impact such as thrust reduction. The leading edge 60 of the respective deswirling struts 58 may be axially aligned with or may be positioned downstream of the start location 56 of the divergently extending crests 52 and valleys 54, depending on flow conditions including upstream low pressure turbine (LPT) residual swirl.

FIG. 7 illustrates an embodiment in which the mixer 30 is similar to that shown in FIG. 3, except that the end 44 of the mixer 30 of this embodiment may define a trailing edge 44a in a closed loop having a jagged trailing edge profile formed by a plurality of downstream projecting tabs 43 such as in a triangular "tooth" shape. The mixer lobe trailing edge treatment root may be located between the respective adjacent tabs 43 to define said one or more upstream-most locations 45 of the mixer trailing edge 44a where the mixing action of the hot gases passing along the radially-inner surface 46 of the mixer 30 and the bypass airstream passing along the radially-outer surface 48 of the mixer 30 begins to take place earlier than at the remaining locations of the mixer trailing edge 44a.

Similar to the mixer shown in FIG. 6, a tip point 63 of the trailing edge 62 of the respective deswirling struts 58 is positioned upstream of said one or more upstream-most locations 45 of the mixer trailing edge 44a, axially distanced therefrom by the predetermined axial clearance A.

Controlling the axial position of the TEC deswirling struts with respect to the mixer lobe trailing edge treatment root to maximize the performance of the integrated TEC/mixer concept, may also be applicable to mixers having other mixer trailing edge profiles, and need not be limited to the mixer trailing edge profiles shown in FIGS. 6 and 7.

The mixers shown in FIGS. 6 and 7 may also include other features of the integrated TEC/mixer struts as described with reference to FIGS. 2-5, such as cambered cross-section of the deswirling struts, deswirling struts being connected with every one or every second one of the valleys 54 of the mixer 30, etc.

Optionally, the integrated TEC/mixer deswirling struts may also alternate (in various combinations) with a set of secondary trailing edge struts having a smaller axial chord with a lower camber (or no camber), as described in Applicant's co-pending US Patent Application No. 2015/0337761 filed on October 23, 2014. The combination of the number of airfoils of either the integrated TEC/mixer deswirling struts and/or the secondary trailing edge struts may vary and is dependent on mixer performance requirements.

Similar to the mixers described with reference to FIGS. 2-5, in the mixers illustrated in FIGS. 6 and 7 the deswirling and mixing actions are accomplished within a compact axial length which saves engine and nacelle weight, and may achieve performance equivalent to or exceeding that of current state-of-art separate mixers and TEC deswirling struts.

The above description is meant to be exemplary only, and one skilled in the art will recognize that changes may be made to the embodiments described without departing from the scope of the described subject matter. Modifications which fall within the scope of the described subject matter will be apparent to those skilled in the art, in light of a review of this disclosure, and such modifications are intended to fall within the appended claims.

## Claims

1. A turbine exhaust case (TEC) (28) of a turbofan aeroengine including an annular mixer (30) for mixing exhaust gases flowing along a radially-inner surface (46) of the mixer (30) with a bypass airstream flowing along a radially-outer surface (48) of the mixer (30), the TEC (28) comprising: an annular hub (36) and said mixer (30) surrounding the hub (36), the mixer (30) having a circumferential array of axially extending lobes (50) defined by circumferentially alternating crests (52) and valleys (54), the crests (52) and valleys (54) diverging from one another beginning at an upstream end (42) of an axial length of the lobes (50) and extending divergently from one another toward and terminating at a trailing edge (44a) of the mixer lobes (50), the trailing edge (44a) defining a downstream end (44) of the axial length of the lobes (50), the trailing edge (44a) of the mixer lobes (50) having a lobe trailing edge treatment root (45) defined at an upstream-most location of the lobe trailing edge (44a) where mixing of the exhaust gases and the bypass airstream begins, the TEC (28) further comprising a plurality of circumferentially spaced deswirling struts (58) radially extending between the mixer (30) and the hub (36) and located entirely within the axial length of the lobes (50), a trailing edge (62) of an outer end of the respective deswirling struts (58) intersecting the mixer (30) upstream of said lobe trailing edge treatment root (45) of the mixer (30), wherein a tip point (63) of the trailing edge (62) of the outer end of the respective deswirling struts (58) is positioned upstream of said upstream-most location of the lobe trailing edge treatment root (45) of the mixer trailing edge (44a) and axially distanced therefrom by a predetermined axial clearance (A) therebetween,
**characterised in that**:
the trailing edge (44a) of the mixer lobes (50) defines a jagged trailing edge profile having a plurality of downstream projecting tabs (43), said upstream-most location of the trailing edge (44a) of the mixer lobes (50) being defined between adjacent tabs (43).

2. The TEC (28) as defined in claim 1, wherein the trailing edge (62) of the respective deswirling struts (58) intersects the mixer (30) at a joint point (63) of the trailing edge (62) of the respective deswirling struts (58) and the mixer (30).

3. The TEC (28) as defined in any preceding claim, wherein the trailing edge (62) of each of the deswirling struts (58) is circumferentially aligned with a bottom of one of the valleys (54).

4. The TEC (28) as defined in any preceding claim, wherein a leading edge (60) of the respective deswirling struts (58) is positioned downstream away from a start location (56) of the divergently extending crests (52) and valleys (54).

5. The TEC (28) as defined in any preceding claim, wherein each of the valleys (54) of the mixer (30) is connected with a corresponding one of the deswirling struts (58).

6. The TEC (28) as defined in any of claims 1 to 4, wherein every second one of the valleys (54) of the mixer (30) is connected with a corresponding one of the deswirling struts (58).

7. The TEC (28) as defined in any preceding claim, wherein the deswirling struts (58) are each cambered in a direction of an incoming swirling flow (70) of the exhaust gases.

8. The TEC (28) as defined in any preceding claim, wherein the tip point (63) of the trailing edge (62) of the respective deswirling struts (58) is a joint point (63) of the trailing edge (62) of the respective deswirling struts (58) and the mixer (30).

9. A turbofan aeroengine comprising the turbine exhaust case (TEC) (28) of any preceding claim positioned downstream of a turbine section for directing a gas flow exhausted from the turbine section, the mixer (30) having a circumferentially wavy configuration to form the axially extending lobes (50) of the mixer (30), the crests (52) defining internal axial passages for directing said exhausted gas flow to pass therethrough along the radially-inner surface (46) of the mixer (30), and the valleys (54) defining external axial passages for directing the bypass airstream to pass therethrough along the radially-outer surface (48) of the mixer (30), resulting in a mixing action of said exhausted gas flow and said bypass airstream, the mixing action beginning to take place at one or more upstream-most locations of the trailing edge (44a) of the mixer (30) earlier than the remaining locations of the trailing edge (44a) of the mixer (30).

## Patentansprüche

1. Turbinenaustrittsgehäuse (TEC - turbine exhaust case) (28) eines Turbofan-Flugtriebwerks, beinhaltend einen ringförmigen Mischer (30) zum Mischen von Abgasen, die entlang einer radialen Innenfläche (46) des Mischers (30) strömen, mit einem Bypass-Luftstrom, der entlang einer radialen Außenfläche (48) des Mischers (30) strömt, wobei das TEC (28) umfasst: eine ringförmige Nabe (36) und den Mischer (30), der die Nabe (36) umgibt, wobei der Mischer (30) eine Umfangsanordnung von sich axial erstreckenden Loben (50) aufweist, die durch in Umfangsrichtung abwechselnde Kämme (52) und Täler (54) definiert sind, wobei die Kämme (52) und Täler (54) beginnend an einem stromaufwärtigen Ende (42) einer Axiallänge der Loben (50) voneinander divergieren und divergent voneinander zu einer Hinterkante (44a) der Mischerloben (50) hin verlaufen und an dieser enden, wobei die Hinterkante (44a) ein stromabwärtiges Ende (44) der Axiallänge der Loben (50) definiert, wobei die Hinterkante (44a) der Mischerloben (50) eine Lobenhinterkantenbehandlungswurzel (45) aufweist, die an einer am weitesten stromaufwärts gelegenen Stelle der Lobenhinterkante (44a) definiert ist, wo Mischen der Abgase und des Bypass-Luftstroms beginnt, wobei das TEC (28) ferner eine Vielzahl von in Umfangsrichtung beabstandeten Entwirbelungsstreben (58) umfasst, die sich radial zwischen dem Mischer (30) und der Nabe (36) erstrecken und sich vollständig innerhalb der Axiallänge der Loben (50) befinden, wobei eine Hinterkante (62) eines äußeren Endes der jeweiligen Entwirbelungsstreben (58) den Mischer (30) stromaufwärts der Lobenhinterkantenbehandlungswurzel (45) des Mischers (30) schneidet, wobei ein Spitzenpunkt (63) der Hinterkante (62) des äußeren Endes der jeweiligen Entwirbelungsstreben (58) stromaufwärts der am weitesten stromaufwärts gelegenen Stelle der Lobenhinterkantenbehandlungswurzel (45) der Mischerhinterkante (44a) positioniert ist und davon axial um einen vorbestimmten Axialabstand (A) dazwischen beabstandet ist, **dadurch gekennzeichnet, dass**:
die Hinterkante (44a) der Mischerloben (50) ein gezacktes Hinterkantenprofil definiert, das eine Vielzahl von stromabwärts vorstehenden Laschen (43) aufweist, wobei die am weitesten stromaufwärts gelegene Stelle der Hinterkante (44a) der Mischerloben (50) zwischen benachbarten Laschen (43) definiert ist.

2. TEC (28) nach Anspruch 1, wobei die Hinterkante (62) der jeweiligen Entwirbelungsstreben (58) den Mischer (30) an einem Verbindungspunkt (63) der Hinterkante (62) der jeweiligen Entwirbelungsstreben (58) und des Mischers (30) schneidet.

3. TEC (28) nach einem der vorhergehenden Ansprüche, wobei die Hinterkante (62) jeder der Entwirbelungsstreben (58) in Umfangsrichtung ausgerichtet mit einem Grund eines von den Tälern (54) ist.

4. TEC (28) nach einem der vorhergehenden Ansprüche, wobei eine Vorderkante (60) der jeweiligen Entwirbelungsstreben (58) stromabwärts entfernt von einer Anfangsstelle (56) der divergent verlaufenden Kämme (52) und Täler (54) positioniert ist.

5. TEC (28) nach einem der vorhergehenden Ansprüche, wobei jedes der Täler (54) des Mischers (30) mit einer entsprechenden der Entwirbelungsstreben (58) verbunden ist.

6. TEC (28) nach einem der Ansprüche 1 bis 4, wobei jedes zweite der Täler (54) des Mischers (30) mit einer entsprechenden der Entwirbelungsstreben (58) verbunden ist.

7. TEC (28) nach einem der vorhergehenden Ansprüche, wobei die Entwirbelungsstreben (58) jeweils in einer Richtung einer einströmenden Wirbelungsströmung (70) der Abgase gewölbt sind.

8. TEC (28) nach einem der vorhergehenden Ansprüche, wobei der Spitzenpunkt (63) der Hinterkante (62) der jeweiligen Entwirbelungsstreben (58) ein Verbindungspunkt (63) der Hinterkante (62) der jeweiligen Entwirbelungsstreben (58) und des Mischers (30) ist.

9. Turbofan-Flugtriebwerk, umfassend das Turbinenaustrittsgehäuse (TEC) (28) nach einem der vorhergehenden Ansprüche, das stromabwärts eines Turbinenabschnitts positioniert ist, zum Leiten eines aus dem Turbinenabschnitt ausgestoßenen Gasstroms, wobei der Mischer (30) eine in Umfangsrichtung wellenförmige Konfiguration aufweist, um die sich axial erstreckenden Loben (50) des Mischers (30) zu bilden, wobei die Kämme (52) innere Axialkanäle definieren, um den ausgestoßenen Gasstrom zu leiten, um dort hindurch entlang der radialen Innenfläche (46) des Mischers (30) zu strömen, und die Täler (54) äußere Axialkanäle definieren, um den Bypass-Luftstrom zu leiten, um dort hindurch entlang der radialen Außenfläche (48) des Mischers (30) zu strömen, was in einer Mischwirkung des ausgestoßenen Gasstroms und des Bypass-Luftstroms resultiert, wobei die Mischwirkung an einer oder mehreren am weitesten stromaufwärts gelegenen Stellen der Hinterkante (44a) des Mischers (30) früher als an den verbleibenden Stellen der Hinterkante (44a) des Mischers (30) stattzufinden beginnt.

## Revendications

1. Carter d'échappement de turbine (TEC) (28) d'un turboréacteur à double flux comportant un mélangeur (30) annulaire destiné à mélanger les gaz d'échappement s'écoulant le long d'une surface radialement interne (46) du mélangeur (30) avec un flux d'air de dérivation s'écoulant le long d'une surface radialement externe (48) du mélangeur (30), le TEC (28) comprenant : un moyeu (36) annulaire et ledit mélangeur (30) entourant le moyeu (36), le mélangeur (30) ayant un réseau circonférentiel de lobes (50) s'étendant axialement, définis par des crêtes (52) et des creux (54) alternés circonférentiellement, les crêtes (52) et les creux (54) divergeant les uns des autres à partir d'une extrémité amont (42) d'une longueur axiale des lobes (50) et s'étendant de manière divergente les uns des autres vers et jusqu'à un bord de fuite (44a) des lobes (50) de mélangeur, le bord de fuite (44a) définissant une extrémité aval (44) de la longueur axiale des lobes (50), le bord de fuite (44a) des lobes (50) de mélangeur ayant une racine de traitement (45) de bord de fuite définie au niveau d'un emplacement le plus en amont du bord de fuite (44a) de lobe, là où commence le mélange des gaz d'échappement et du flux d'air de dérivation, le TEC (28) comprenant en outre une pluralité d'entretoises de suppression de turbulence (58) circonférentiellement espacées, s'étendant radialement entre le mélangeur (30) et le moyeu (36) et situées entièrement au sein de la longueur axiale des lobes (50), un bord de fuite (62) d'une extrémité externe des entretoises de suppression de turbulence (58) respectives croisant le mélangeur (30) en amont de ladite racine de traitement (45) de bord de fuite de lobe du mélangeur (30), dans lequel un point formant pointe (63) du bord de fuite (62) de l'extrémité externe des entretoises de suppression de turbulence (58) respectives est positionné en amont dudit emplacement le plus en amont de la racine de traitement (45) de bord de fuite de lobe du bord de fuite (44a) de mélangeur et à distance axiale de celui-ci par un jeu axial (A) prédéterminé entre eux,
**caractérisé en ce que** :
le bord de fuite (44a) des lobes (50) de mélangeur définit un profil de bord de fuite dentelé ayant une pluralité de languettes (43) saillantes en aval, ledit emplacement le plus en amont du bord de fuite (44a) des lobes (50) de mélangeur étant défini entre des languettes (43) adjacentes.

2. TEC (28) selon la revendication 1, dans lequel le bord de fuite (62) des entretoises de suppression de turbulence (58) respectives croise le mélangeur (30) au niveau d'un point de jonction (63) du bord de fuite (62) des entretoises de suppression de turbulence (58) respectives et du mélangeur (30).

3. TEC (28) selon une quelconque revendication précédente, dans lequel le bord de fuite (62) de chacune des entretoises de suppression de turbulence (58) est aligné circonférentiellement avec un fond de l'un des creux (54).

4. TEC (28) selon une quelconque revendication précédente, dans lequel un bord d'attaque (60) des entretoises de suppression de turbulence (58) respectives est positionné en aval à distance d'un emplacement de départ (56) des crêtes (52) et des creux (54) s'étendant de manière divergente.

5. TEC (28) selon une quelconque revendication précédente, dans lequel chacun des creux (54) du mélangeur (30) est relié à une entretoise correspondante des entretoises de suppression de turbulence (58).

6. TEC (28) selon l'une quelconque des revendications 1 à 4, dans lequel chaque second creux des creux (54) du mélangeur (30) est relié à une entretoise correspondante des entretoises de suppression de turbulence (58).

7. TEC (28) selon une quelconque revendication précédente, dans lequel les entretoises de suppression de turbulence (58) sont chacune cambrées dans une direction d'un flux tourbillonnaire entrant (70) des gaz d'échappement.

8. TEC (28) selon une quelconque revendication précédente, dans lequel le point formant pointe (63) du bord de fuite (62) des entretoises de suppression de turbulence (58) respectives est un point de jonction (63) du bord de fuite (62) des entretoises de suppression de turbulence (58) respectives et du mélangeur (30).

9. Turboréacteur à double flux comprenant le carter d'échappement de turbine (TEC) (28) selon une quelconque revendication précédente positionné en aval d'une section de turbine pour diriger un écoulement de gaz évacué de la section de turbine, le mélangeur (30) ayant une configuration ondulée circonférentiellement pour former les lobes (50) s'étendant axialement du mélangeur (30), les crêtes (52) définissant des passages axiaux internes pour diriger ledit écoulement de gaz évacué à travers ceux-ci le long de la surface radialement interne (46) du mélangeur (30), et les creux (54) définissant des passages axiaux externes pour diriger le flux d'air de dérivation à travers ceux-ci le long de la surface radialement externe (48) du mélangeur (30), ce qui entraîne une action de mélange dudit écoulement de gaz évacué et dudit flux d'air de dérivation, l'action de mélange commençant à se produire au niveau d'un ou plusieurs emplacements les plus en amont du bord de fuite (44a) du mélangeur (30) avant les autres emplacements du bord de fuite (44a) du mélangeur (30).
